# EUROPEAN PATENT APPLICATION

(11) **EP 0 688 128 A1**
(43) Date of publication of application: **20.12.1995**
(21) Application number: 95109104.0
(22) Date of filing: 13.06.1995
(51) Int. Cl.: H04N 1/00

(54) **Image forming apparatus**

(30) Priority: 13.06.1994 JP 130215/94; 13.06.1994 JP 130216/94; 13.06.1994 JP 130217/94
(71) Applicant: MITA INDUSTRIAL CO. LTD., Osaka-shi Osaka 540 (JP)
(72) Inventor: Miyazaki, Tadashi, Chuo-Ku, Osaka-Shi, Osaka 540 (JP); Kumamoto, Hidechika, Chuo-Ku, Osaka-Shi, Osaka 540 (JP); Fujimoto, Masaya, Chuo-Ku, Osaka-Shi, Osaka 540 (JP)
(74) Representative: Patentanwälte Beetz - Timpe - Siegfried Schmitt-Fumian - Mayr

(57) **Abstract**

A copying machine is provided with a scanning optical system (14) which optically scans an original M, a photoelectrically converting circuit (16, 23) which converts an output of the scanning optical system (14) into an electric signal, and an image processing circuit (17) which processes an output of the photoelectrically converting circuit (16, 23). It is determined whether or not an output of the image processing circuit (17) coincides with an image data representative of a bank note previously stored in a memory. When the read-in image data is determined to be the same as the image of the bank note, the normal reading operation by the scanning optical system (14) is inhibited by an inhibiting circuit (25).

## Description

### BACKGROUND OF THE INVENTION

### Field of the Invention

The present invention relates to an image forming apparatus and an image reading apparatus designed to prevent the forgery of bank notes, securities and the like.

### Description of the Prior Art

In recent years, digital color electrographic copying machines have been spreading, and most of them are used for beneficial purposes. However, since anyone can easily obtain a copy with a high resolution and an excellent color reproducibility because of the improvement in performance of such copying machines, the forgery of bank notes, which is a serious crime, may easily be committed.

For this reason, manufactures of digital color copying machines are examining to provide a bank note recognizing system in a copying machine in order to prevent to the utmost the forgery of bank notes which is a crime exerting a great influence on society. With the bank note recognizing system, when someone tries to copy a bank note, the image forming apparatus such as a copying machine judges that the original is a bank note based on data on characteristics of the bank note stored in the apparatus in advance, and the copy is outputted, for example being smeared.

As an example of such a bank note recognizing system, Japanese Laid-open Patent Application No. H4-227365 discloses a copying machine of a method which judges the coincidence between a read-out input image and a specific image and controls a processing means for reproducing an image based on the output of the judgement. Japanese Laid-open Patent Application No. H4-227367 discloses an image processor which judges the coincidence between an input image and a specific image like in the former prior art and controls based on the output of the judgement a processing means for reproducing an image so as to inhibit image reproduction.

However, in any of the above-mentioned prior arts, since the element controlled based on a result of the judgement of the coincidence between an input image and a specific image is a processing means for reproducing an image (specifically, a printer output of a copying machine), the following problems arise.

That is, recently, a scanner portion which serves as an image input portion of a digital copying machine is increasingly used being connected to an external apparatus such as a workstation through an interface provided to the scanner portion so that the scanner portion may be used as an image inputter.

When the scanner portion is used in this manner, since an original image converted into an electric signal as an image data by the scanner portion can be stored in a memory of the workstation, an outputter other than the digital copying machine provided with the scanner portion is connected as a terminal of the workstation, so that a copy of the original image can be printed out by the outputter.

Therefore, by the method of controlling the printer output when the image is reproduced like in the above prior arts, since the data of an original image has been created in the scanner portion which serves as an image input portion, when the scanner portion is employed in a copying machine connectable to a workstation through the interface as described above or in a copying machine remodeled so that the scanner portion can be connected to a workstation, even though it is recognized that the original is a bank note which must be inhibited from being copied, the control performed after the recognition does not reach the scanner portion, so that the bank note is faithfully printed out from another outputter connected to the workstation. As a result, the forgery of bank notes cannot be prevented.

Further, in the above-described prior arts, when an original such as a bank note inhibited from being copied is copied, a specifying data which is difficult to view with the naked eye is printed on the copy output in order that the machine with which the copy was made and the date when the copy was made are specified by the data. With this, even if a bank note is copied in a normal copying process, the tracing of the bank note can be performed, and it is possible to find the copy of the bank note is a forgery by reading out the specifying data with a scanner. As the specifying data, for example, a data particular to the copying machine such as a manufacturer's serial number of the machine is used.

In such a copying machine, the serial number of the copying machine must be stored, and in assembling the copying machine, it is necessary to input the serial number in the final process. The serial number is inputted at an operation portion of the copying machine in a special mode such as a service mode and a simulation mode.

Specifically, the body of a copying machine incorporating a scanner portion and a printer portion is normally provided with a backed-up memory using a battery as the power source. The serial number of the copying machine is stored in the backed-up memory together with the other set data to be backed-up. The setting of the serial number is performed with the copying machine being in the service mode or in the simulation mode by an assembler at the plant or by a service man at the market.

However, since the setting of the special modes and the setting of the serial number of the copying machine can easily be performed by anyone only by referring to a service manual explaining the setting, it is possible to change the serial number stored in the backed-up memory of the copying machine. As a result, the backed-up data is useless as a data (in this case, the serial number of the copying machine) stored to be printed on the copy output to specify the machine.

To solve this problem, it is considered to set the specific service mode used to store the specifying data by means of software. In this case, however, since a manual is necessary for each service man, the data can be changed by obtaining the manual. Thus, this cannot be a radical solution.

Moreover, it is considered to control such a special mode to operate only once after the completion of the copying machine. With this arrangement, however, when it is necessary to re-input the serial number for reasons of the assembling process, there is a possibility that the re-input is impossible. Thus, this is an unrealizable solution.

### SUMMARY OF THE INVENTION

An object of the present invention is to inhibit reading out of an original (bank note) inhibited from being copied as an image data by providing a scanner portion with a means for controlling an image input based on a result of recognition of a specific original such as a bank note.

Another object of the present invention is to provide a copying machine wherein in order to specify the copying machine with which a copy was made and the date when the copy was made, those data are printed on the sheet being incorporated in the copied image, said copying machine being designed so that the data for specifying the copying machine and the copy date is unchangeable.

Still another object of the present invention is to provide an image forming apparatus provided with a data writer capable of writing a data for specifying a copying machine in an unrewritable condition.

According to one feature of the present invention, an image forming apparatus is provided with: an image reading portion; an image outputting portion which forms a read-in image on a sheet of paper; means for determining whether the read-in image is the same as a specific image or not; and inhibiting means for inhibiting an operation of the image reading portion when the read-in image is the specific image.

According to another feature of the present invention, an image forming system is provided with: an image forming apparatus; an image processing circuit provided in the image forming apparatus, said image processing circuit incorporating a specific data in a copy image data of an original image as a data difficult to view by a naked eye and outputting the data; a data inputter connectable to and disconnectable from the image forming apparatus, said data inputter inputting the specific data to the image forming apparatus; connection recognizing means for recognizing that the data inputter is connected to the image forming apparatus; and storing means for storing the specific data inputted from the data inputter when it is recognized that the data inputter is connected to the image forming apparatus.

According to still another feature of the present invention, an image forming apparatus is provided with: an image reading portion; an image processing circuit which outputs a specific data on a read-in original image data as a data difficult to view by a naked eye; a printer which forms an image on a sheet of paper based on an output data of the image processing circuit; initial setting means for performing an initial setting of the calendar/clock function; storing means for storing an initial setting data of the calendar/clock function as a specific data; and controlling means for controlling the initial setting means to function only once.

### BRIEF DESCRIPTION OF THE DRAWINGS

These and other objects and features of this invention will become clear from the following description, taken in conjunction with the preferred embodiments with reference to the accompanied drawings in which:
Fig. 1 schematically shows the general arrangement of a full-color digital electrographic copying machine according to embodiments of the present invention;
Fig. 2 is a block diagram showing the arrangement of an image reading portion according to a first embodiment of the present invention;
Fig. 3 shows a specific example of a shading correcting circuit of the first embodiment;
Fig. 4 is a block circuit diagram of the copying machine including an image processing unit and a serial number inputter in the second embodiment of the present invention;
Fig. 5 shows the operation keys of the serial number inputter;
Fig. 6 is a block circuit diagram of the copying machine including an image processing unit and a serial number inputter according to a third embodiment of the present invention;
Fig. 7 is a block circuit diagram of the copying machine including an image processing unit according to a fourth embodiment of the present invention;
Fig. 8 is a conceptional view showing the mapping of a backed-up memory area;
Fig. 9A shows the initial condition of the backed-up memory area;
Fig. 9B shows the condition of the backed-up memory area during and after the initialization;
Fig. 10A shows the condition of the backed-up memory area during and after the calendar/time setting; and
Fig. 10B shows the condition of the backed-up memory area during and after the initial setting of data.

### DESCRIPTION OF THE PREFERRED EMBODIMENTS

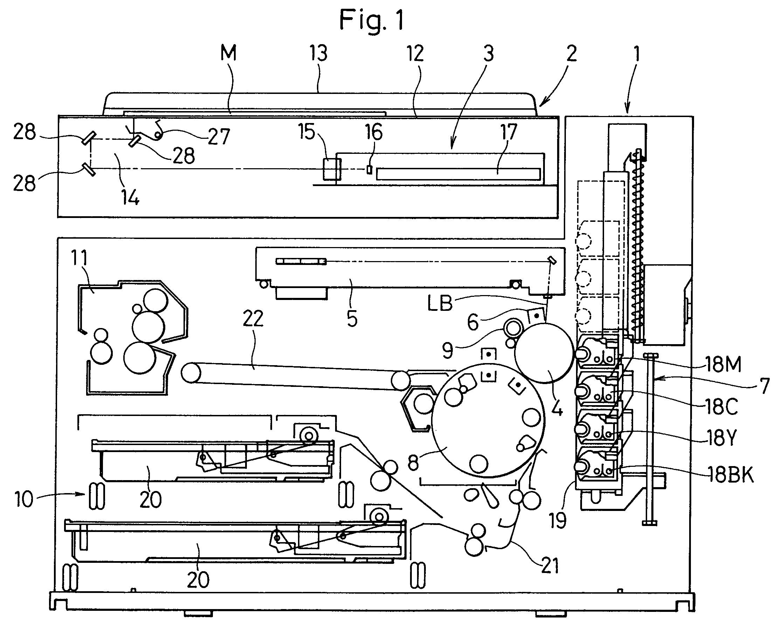

Hereinafter, an embodiment where the present invention is employed in a scanner portion of a full-color digital electrographic copying machine will be described with reference to the drawings. Referring to Fig. 1, there is schematically shown a full-color digital electrophotographic copying machine incorporating a scanner portion according to this embodiment. Reference numeral 1 represents a machine body. Reference numeral 2 represents an original stand. Reference numeral 3 represents a scanner portion arranged in an upper portion of the machine body 1. Reference numeral 4 represents a photoreceptor drum arranged in the machine body 1. Reference numeral 5 represents a laser scanner unit constituting an optical system for exposing the photoreceptor drum 4.

Along the periphery of the photoreceptor drum 4, the following are provided in this order in the rotation direction of the photoreceptor drum 4: a main charger 6 including a corona discharger; a developer unit 7; a transfer drum 8; and a cleaning unit 9. Reference numeral 10 represents a paper feeding portion, and reference numeral 11 represents a fixing unit.

The original stand 2 includes a contact glass 12 arranged on the upper surface of the machine body 1 and an original cover 13 arranged on the contact glass 12 to be openable and closable. The scanner portion 3 includes a scanning optical system 14 for scanning an original image, a condenser lens 15, a CCD line sensor 16 which functions as a light receiving device and a subsequently-described image processing circuit 17.

An image of an original M placed on the contact glass 11 while being pressed thereonto by the original cover 13 is scanned by the scanning optical system 14 of the scanner portion 3. Image information is directed with light as a medium from the condenser lens 15 to the CCD line sensor 16, where the image information is converted into an electric signal. Then, the electric signal is processed by the image processing circuit 17. Thereafter, the original image data is supplied from the image processing circuit 17 to the laser scanner unit 5.

The surface of the photoreceptor drum 4 which is rotating is charged by a corona discharge by the main charger 6. Then, an electrostatic latent image of the original image is formed on the charged surface of the photoreceptor drum 4 by the laser scanner unit 5, and charged toner is attached to the electrostatic latent image by the developer unit 7 to form a toner image of the original image.

The developer unit 7 includes, for example, an M developer unit 18M containing magenta toner to develop the image with the magenta toner, a C developer unit 18C containing cyan toner to develop the image with the cyan toner, a Y developer unit 18Y containing yellow toner to develop the image with the yellow toner, and a BK developer unit 18BK containing black toner to develop the image with the black toner. These developer units are successively attached in a vertical direction on a moving member 19 which moves vertically, and are alternatively brought to a development position which is opposite to the photoreceptor drum 4 according to the color of the color image data for forming the latent image by a laser beam LB irradiated from the laser scanner unit 5.

To form a full-color image, as described previously, an electrostatic latent image is formed on the surface of the photoreceptor drum 4 by the laser beam LB irradiated from the laser scanner unit 5 based on a magenta color image data. The latent image is developed by the M developer unit 18M.

In the paper feeding portion 10, a plurality of paper feeding cassettes 20 are set containing sheets of various sizes. A sheet of paper fed from an alternatively selected paper feeding cassette 20 is supplied to the transfer drum 8 through a paper feeding path 21. The image on the surface of the photoreceptor drum 4 which has been developed with the magenta toner is transferred onto the sheet arranged to wind around the surface of the transfer drum 8. The sheet remains wound around the transfer drum 8 after the magenta image is transferred for the next image transfer.

After the completion of transfer of the magenta toner, residual toner on the surface of the photoreceptor drum 4 is removed by the cleaning unit 9 together with dust adhering to the surface of the photoreceptor drum 4. Then, the charge is removed when the surface passes a discharging unit (not shown) arranged between the cleaning unit 9 and the main charger 6. Thereafter, the surface is again charged by the main charger 6, and at this time, is exposed by a laser beam LB for forming a latent image based on a cyan color image data.

The electrostatic latent image formed by this exposure and corresponding to a cyan image is developed by the C developer unit 18C in a manner similar to that of the magenta image formation. At this time, the C developer unit is brought to the position opposite to the photoreceptor drum 4 instead of the M developer unit 18M. The image on the photoreceptor drum 4 developed with the cyan toner is transferred onto the sheet where the magenta image has been transferred and which is held on the surface of the transfer drum 8.

Onto the sheet where the magenta and cyan images have been transferred, a yellow image and a black image are further transferred by repeating a process similar to the above-described magenta and cyan image forming and transferring processes, and finally, a full-color copy image faithful to the original image is formed. After separated from the transfer drum 8, the sheet where a full-color image has been formed is conveyed to the fixing unit 11 by a sheet conveying unit 22, and heated and pressurized by the fixing unit 11 to thereby fix the toner image on the sheet P. Finally, the sheet P is discharged from the machine body 1.

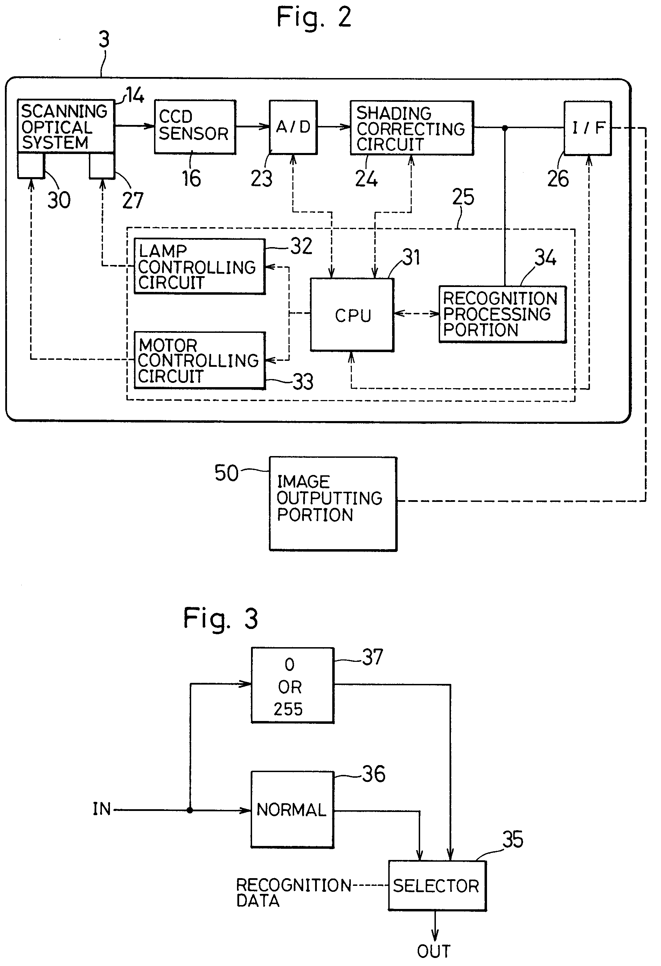

Referring to Fig. 2, there is shown the arrangement of the scanner portion 3 of a first embodiment. As described previously, the scanner portion 3 includes the scanning optical system 14, the condenser lens 15, the CCD line sensor 16 and the image processing circuit 17. In this embodiment, the image processing circuit 17 includes an analog to digital (A/D) converter 23 which converts an analog data of an original image read out by the CCD line sensor 16 into digital format, a shading correcting circuit 24 which shading-corrects the A/D-converted image data, the scanning optical system 14, the A/D converter 23 and a microprocessor 25 which controls the shading correcting circuit 24.

The scanner portion 3 incorporates an interface 26. The processed original image data is connected through the interface 26 to an image outputting portion 50 including the laser scanner unit 5, the drum 4, the developer unit 7, the transfer drum 8 and the fixing unit 11. The scanner portion 3 can be connected to an external apparatus such as a workstation.

Subsequently, the arrangement of the scanner portion 3 will be described more specifically. The scanning optical system 14 includes, as shown in Fig. 1, a halogen scanner lamp 27 which irradiates the original image through the contact glass 12 and a plurality of mirrors 28 for directing to the condenser lens 15 the light irradiated by the scanner lamp 27 and reflected by the original image. In Fig. 2, reference numeral 30 represents a driving motor which drives the optical system 14. The scanning optical system 14 constitutes an image input portion together with the CCD line sensor 16, the A/D converter 23 constituting a part of the image processing circuit 17, and the shading correcting circuit 24.

The microprocessor 25 includes, as shown in Fig. 2, a central processing unit (CPU) 31, a lamp controlling circuit 32 which controls the scanner lamp 27 based on an instruction from the CPU 31, a motor controlling circuit 33 which controls the driving motor 30 based on an instruction from the CPU 31, and a recognition processing portion 34 which functions as a judging portion.

The recognition processing portion 34 judges the coincidence between an original image read out by the image input portion and a specific image by a known pattern matching recognition method. In this embodiment, the specific image is the image pattern of an original such as a bank note inhibited from being copied. At the recognition processing portion 34, an operation is performed to judge whether the original placed on the contact glass 12 is a bank note or not. The CPU 31 controls operations of the image input portion based on a result of the judgement by the recognition processing portion 34.

Thus, according to this embodiment, in outputting a copy image of an original image by the copying machine itself, when the original image coincides with the specific image, the original image reading operation is inhibited at the scanner portion 3 before the image is outputted to the image outputting portion 50.

Subsequently, a specific operation of the scanner portion 3 having the above-described arrangement will be described. When the scanning is performed by the scanning optical system 14 as described previously, the scanner lamp 27 is turned on and the driving motor 30 is excited to optically read out the image information on the original M. The image information is converted into an analog electric signal by the CCD line sensor 16. The image data is converted into a digital signal by the A/D converter 23 and corrected by the shading correcting circuit 24. The corrected image data is supplied to the recognition processing portion 34.

At the recognition processing portion 34, the pattern of the image data is compared with the pattern of the specific image, and the result is transmitted to the CPU 31. When the pattern of the image data of the original M does not coincide with the pattern of the specific image, the image data of the original M is transmitted in the normal condition to a printer portion of the copying machine or to an external workstation through the interface 26. On the contrary, when the image data of the original M judged by the recognition processing portion 34 is regarded as being the same as the specific image, the CPU 31 cancels the image data, and inhibits the reading out operation of the image input portion or disables the data transmission to the image outputting portion 50.

Firstly, when the reading out operation is inhibited, for example, the CPU 31 controls the motor driving circuit 33 to disable the driving motor 30 so that the image of the original M placed on the contact glass 12 cannot be inputted. Secondly, when the data transmission to the image outputting portion 50 is disabled, for example, the CPU 31 controls the interface 26 to shut out the image data transmission from the interface 26.

Thus, according to the present invention, since the transmission of the original image is inhibited at the time of the reading out of the original by the scanner portion 3 when the image of the original M is regarded as being the same as the specific image, no copy of the original can be obtained even when the scanner portion 3 is designed to operate independently so that the copy is printed out by an external apparatus through the interface 26.

Further, according to the present invention, when the original image is judged to coincide with the specific image, it is possible to cause the CPU 31 to inhibit the processing performed by the image input portion for inputting an image data faithful to the original image.

In this case, for example, the CPU 31 controls the lamp controlling circuit 32 to decrease the light quantity of the scanner lamp 27 or to turn off the scanner lamp 27 to thereby make the image of the original M dim and unclear or black to inhibit the normal data input. Moreover, a CCD driving clock formed as software in the CPU 31 may be stopped so that the photoelectric conversion by the CCD line sensor 16 cannot normally be performed.

Further, as another example, the shading correction data may be changed by controlling the shading correcting circuit 24 by the CPU 31 so that an abnormal image such as a black or a white image is inputted to the image outputting portion 50. Specifically, a conversion table is stored in a memory of the shading correcting circuit 24, and a reference voltage is set for correcting the digital image data actually read-in through the A/D converter 23 after comparing it with the numerical contents of the table, and returning the data to an analog signal and A/D converting it.

In this case, in the conversion table, 256 tones from white to black are set as a reference of brightness in the scanner portion 3. Black is a tone realized when the scanner lamp 27 is OFF, and the data representing that is "0". The data representing white is "255". For example, when the maximum tone of the brightness of the image data provided from the CCD line sensor 16 is 240 and the minimum tone is 20, the data is converted so that the maximum tone is 255 and the minimum tone is 0.

In this modification, the contents of the conversion table is rewritten or invalidated by using a tone correcting function of the conversion table to output an abnormal and inappropriate image data.

Referring to Fig. 3, there is shown a circuit for changing the shading data. Reference numeral 35 represents a selector which is changed over by an output of the recognition processing portion 34. Reference numeral 36 represents a first conversion table for the normal rewriting. Reference numeral 37 represents a second conversion table for rewriting the contents intentionally.

Assume now that an image data of the original M is supplied from the CCD line sensor 16 to the A/D converter 23. This data is normally converted at the first conversion table 36, and is converted to "0" representing black or "255" representing white irrespective of its tone. The converted data are outputted from the conversion tables 36 and 37 to the selector 35.

At this time, when a judgement result that the image of the original M does not coincide with the specific image is supplied from the recognition processing portion 34 to the selector 35, the selector 35 selects the normal image data outputted from the first conversion table 36, and outputs a normal image data to the image outputting portion 50 through the interface 26. On the contrary, when a judgement result that the image of the original M coincides with the specific image is supplied from the recognition processing portion 34 to the selector 35, the selector 35 selects the data outputted from the second conversion table 37 which data represents black or white, and outputs an inappropriate image data to the image outputting portion 50 through the interface 26.

As described above, by transmitting an inappropriate data different from the original image at the time of the reading out of the original by the scanner portion 3 when the image of the original M is regarded as being the same as the specific image, no copy of the original can be obtained even when printing out is performed by an external apparatus.

As described above, according to the first embodiment, since the coincidence of an original image data read out by the image input portion such as the scanner portion of the copying machine and the specific original is judged and the operation of the image input portion is controlled based on a result of the judgement. Therefore, even if someone tries to copy the specific image such as a bank note, the image input portion does not read in the original image or reads in it in the form apparently different from the original image when the original is judged to be the specific original. Consequently, when the apparatus of the present invention is connectable to an external apparatus such as a workstation through an interface, not to mention when the copy is outputted from the image output means, i.e. the printer portion of the copying machine, the copy of the original is not outputted from the external apparatus or is outputted only in a form which is apparently found to be a forgery. As a result, the illicit use of forged images is surely prevented.

Subsequently, an embodiment will be described where when no coincidence is detected and the bank note is printed out, the serial number of the copying machine and the date of the copying are added to the printed-out image, and the data representative of the serial number and the date cannot be changed.

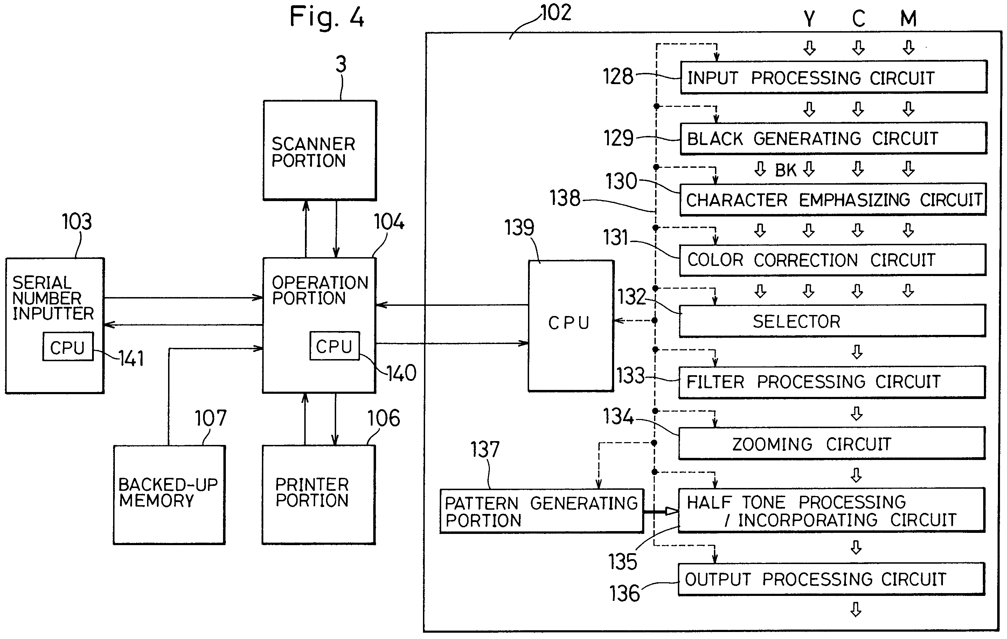

In the second embodiment, the copying machine body 1 is provided with an image processing unit 102 shown in Fig. 4. Referring to Fig. 4, the image processing unit 102 incorporates a serial number of the copying machine as a specifying data in the copied image of an original image arid outputs it to the printer portion 106 of the copying machine body 1. The image processing unit 102 includes an input processing circuit 128 for processing a signal input of the scanner portion 3, a black generating circuit 129, a character emphasizing circuit 130, a color correcting circuit 131, a selector 132, a filter processing circuit 133, a zooming circuit 134, a half tone processing/incorporating circuit 135, an output processing circuit 136, a pattern generating portion 137 and a central processing unit (CPU) 139 for controlling the above elements through a data address 138.

Although not shown in Fig. 2, the scanner portion 3 divides the image data read out from the original into data on the three primary colors of light, and converts the data into data on the three primary colors of toner, i.e. data M (magenta), C (cyan) and Y (yellow). The input processing circuit 128 performs a processing such as a frequency conversion to the three primary color data M, C and Y. Based on the processed image data M, C and Y, the black generating circuit 129 generates a black data BK. After the character emphasizing processing is performed by the character emphasizing circuit 130, the image data where the black data BK has been generated is color-corrected in accordance with the toner by the color correcting circuit 131.

The selector 132 selects the data M, C, Y and BK of four colors one by one and provides it to the filter processing circuit 133. The selection, although not limited thereto, is made in the order of M, C, Y and BK. The selected image data is transmitted through the filter processing circuit 133, enlarged or reduced by the zooming circuit 134, and processed by the half tone processing/incorporating circuit 135. Thereafter, the image data is outputted as a video signal (pulse) by the output processing circuit 136.

In the image processing unit 102, the image data is supplied from the selector 132 to the filter processing circuit 133 only every color. Therefore, as described previously, the image reading operation by the scanner portion 3 is performed four times for one image, and processing by each portion shown in Fig. 1 is performed every color (i.e. once for each of magenta, cyan, yellow and black). Likewise, the printer portion 106 which operates on the output from the output processing circuit 136 performs development and printing every color.

In this embodiment having the above-described arrangement, with the subsequently-described arrangement, a serial number of the copying machine is used as the data to specify the copying machine with which a copy of an original was made, and a control method is employed in which the serial number can be inputted only from the serial number inputter 103. The serial number inputter 103 should be manufactured in a limited number and should strictly be taken charge of.

The pattern generating portion 137 provided in the image processing unit 102 adds a data particular to a copying machine (in this embodiment, the serial number of the copying machine) to the original image data in order to discriminate and manage the copying machine with which the copy was made. As the added data, a pattern in accordance with a predetermined rule is used which is difficult to view with the naked eye when printed on the sheet as a copy image and that can be recognized and discriminated by reading out by a separately provided scanner after the copied image is outputted.

When a copying operation is started at the copying machine body 1, the pattern generating portion 137 converts the added data to generate a pattern of addition and outputs the pattern of addition to the half tone processing/incorporating circuit 135. The half tone processing/incorporating circuit 135 incorporates the pattern of addition in the original image data, and the composite image data is outputted to the printer portion 106 through the output processing circuit 136.

In this embodiment, the serial number of the copying machine can be set in the pattern generating portion 137 by a CPU 140 of the operation portion 104, the backed-up memory 107 and the serial number inputter 103. The serial number backed-up at the operation portion 104 is transmitted from the CPU 140 to the CPU 139, and is transmitted from the CPU 139 to the pattern generating portion 137 through the data address 138 to be set as the data of addition.

The serial number inputter 103 is designed so that a serial number as the specifying data can be inputted therethrough, and has a function to transfer the inputted data to the copying machine body 1. In addition, the serial number inputter 103 can be connected to and disconnected from the copying machine body 1, and can input and transfer the serial number by a control operation of a CPU 141 incorporated therein only when it is connected to the operation portion 104 of the copying machine body 1.

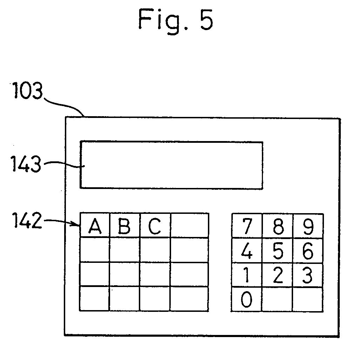

Further, the serial number inputter 103 is provided with, for example as shown in Fig. 5, a serial number inputting operation portion 142 including a keyboard having a plurality of function keys including ten keys and alphabet keys, and a display panel 143 for displaying input data. While the inputter 103 is driven by the power source of the copying machine body 1, the present invention is not limited thereto; the inputter 103 may have an independent power source.

The CPU 140 has a connection recognizing function to, when the serial number inputter 103 is connected to the operation portion 104, recognize the completion of the connection and that the connected apparatus is the inputter 103, and operates to store in the backed-up memory 107 the serial number transferred from the serial number inputter 103 to the copying machine body 1 only when it is recognized that the apparatus connected to the copying machine body 1 is the serial number inputter 103.

Subsequently, a process of inputting the serial number will be described. First, after the power of the copying machine body 1 is confirmed to be OFF, the serial number inputter 103 is connected to the operation portion 104. Then, the power of the copying machine body 1 is activated. Thereafter, the CPU 140 of the operation portion 104 performs the connection confirming processing by the serial number inputter 103 in the following manner.

First, a connection confirmation response requesting command and an apparatus code are transmitted from the CPU 140, and a response from the serial number inputter 103 is waited. Receiving the connection confirmation response requesting command and the apparatus code, a CPU 141 of the serial number inputter 103 transmits a connection confirmation recognizing command and an apparatus code to the operation portion 104. Receiving the connection confirmation recognizing command and the apparatus code, the CPU 140 of the operation portion 104 compares the received apparatus code with the apparatus code which the operation portion 104 transmitted to the inputter 103. When the apparatus codes coincide with each other, the connection of the inputter 103 is recognized.

When the serial number inputter 103 does not respond to the apparatus code transmitted from the operation portion 104 although a predetermined period of time is waited, the connection confirmation response requesting command and the apparatus code are transmitted again, and the response from the serial number inputter 103 is again waited for. When there is no response even though this process is repeated several times, it is recognized that the serial number inputter 103 is not connected.

When the connection of the serial number inputter 103 to the operation portion 104 of the copying machine body 1 is completed, the serial number of the copying machine is inputted by operating the input operation portion 142 of the serial number inputter 103. The input data is displayed on the display panel 143 and temporarily stored in the CPU 141 of the serial number inputter 103. When the data input is completed, the input data displayed on the display panel 143 is confirmed, and a predetermined key of the input operation portion 142 is pressed to transfer the serial number data from the CPU 141 to the CPU 140 of the operation portion 104.

The transferred serial number data is written in the backed-up memory 107 by the CPU 140. However, when it is not recognized that the connected apparatus is the serial number inputter 103 in the above-described recognition operation of the serial number inputter 103, the CPU 140 does not write the serial number data in the backed-up memory 107. When it is recognized that the writing of the serial number data is completed, the serial number inputter 103 is disconnected from the operation portion 104.

Thus, according to the second embodiment, the serial number of the copying machine for specifying the copying machine is inputted only from the serial number inputter 103 which can be connected to and disconnected from the copying machine body 1, and the serial number inputter 103 is manufactured in a limited number and strictly taken charge of. As a result, the intentional rewriting of the serial number is surely prevented.

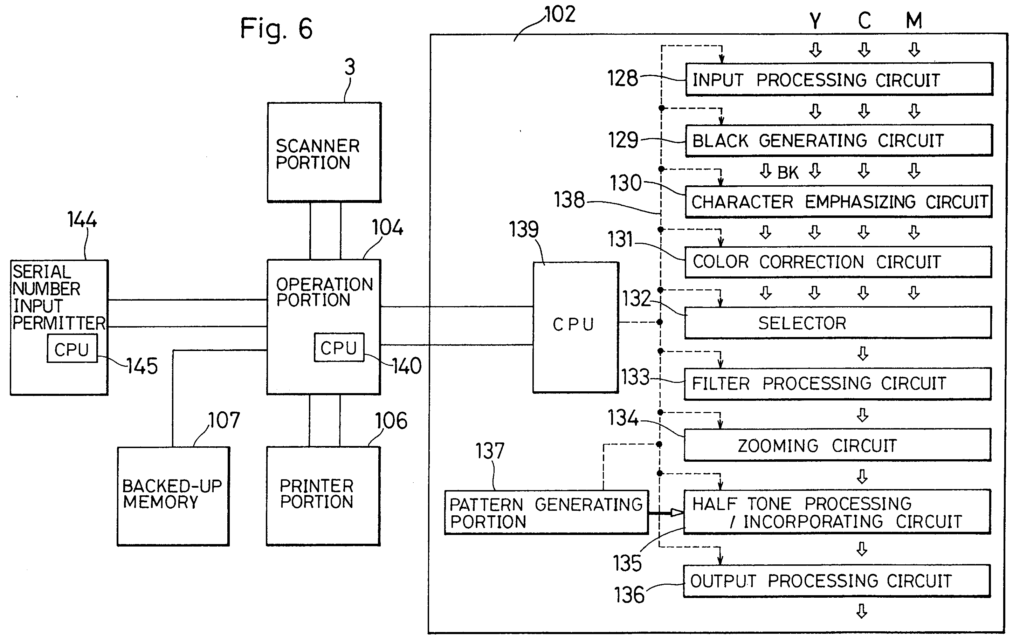

Referring to Fig. 6, there is shown the electrical structure of a third embodiment of the present invention. The portions having the same arrangements and functions as those of the embodiment of Fig. 4 are identified by the same reference designations and will not be described. In the third embodiment, instead of the serial number inputter 103 used in the above-described second embodiment, a serial number input permitter 144 is used as a data input permitter. The serial number input permitter 144 can be connected to and disconnected from the copying machine body 1. The response operation for confirming the connection of the serial number input permitter 144 to the operation portion 104 of the copying machine body 1 is performed by a control operation of a CPU 145 incorporated in the permitter 144.

The CPU 140 of the operation portion 104 has a connection recognizing function to, when the serial number input permitter 144 is connected to the operation portion 104, recognize the completion of the connection and that the connected apparatus is the permitter 144, and only when it is recognized that the apparatus connected to the copying machine body 1 is the serial number permitter 144, the serial number of the copying machine can be inputted by operating a key board (not shown) of the operation portion as a data inputting means and the inputted serial number can be stored in the backed-up memory 107.

Subsequently, a process of inputting the serial number will be described. First, after the power of the copying machine body 1 is deactivated, the serial number input permitter 144 is connected to the operation portion 104. Then, the power of the copying machine body 1 is activated. Thereafter, the CPU 140 performs the connection confirmation process of the serial number input permitter 144 in a manner similar to that of the serial number inputter 103 of the previously-described embodiment.

Specifically, the CPU 140 transmits a connection confirmation response requesting command and an apparatus code and waits for a response from the serial number input permitter 144. Receiving the connection confirmation response requesting command and the apparatus code, the CPU 141 of the serial number input permitter 144 transmits a connection confirmation recognizing command and an apparatus code to the operation portion 104. Receiving the connection confirmation recognizing command and the apparatus code, the CPU 140 of the operation portion 104 compares the received apparatus code with the apparatus code which the operation portion 104 transmitted to the permitter 144. When the apparatus codes coincide with each other, the connection of the permitter 144 is recognized. When there is no response to the connection confirmation response requesting command and the apparatus code even though they are repeatedly transmitted, it is recognized that the permitter 144 is not connected.

When the connection of the serial number input permitter 144 to the operation portion 104 is recognized, the CPU 140 of the operation portion 104 permits the activation of a means for inputting the serial number of the copying machine. That is, the serial number can be inputted by operating the key board of the operation portion 104. The input data is written in the backed-up memory 107 by the CPU 140.

However, when it is not recognized that the connected apparatus is the serial number input permitter 144 by the operation portion 104 in the above permitter recognition operation, the CPU 140 does not write the serial number data in the backed-up memory 107. When it is recognized that the writing of the serial number data is completed, the serial number input permitter 144 is disconnected from the operation portion 104.

The serial number written in the backed-up memory 107 is transmitted from the CPU 140 of the operation portion 104 to the CPU 139 of the image processing unit 102, and set to the pattern generating portion 137 as a data of addition by the CPU 139 through the data address 138. While the serial number permitter 144 is driven by the power source of the copying machine body 1, the present invention is not limited thereto; the permitter 144 may have an independent power source.

Thus, according to the third embodiment, the process of inputting the serial number of the copying machine for specifying the copying machine is performed only when the serial number input permitter 144 which can be connected to and disconnected from the copying machine body 1 is connected, and the serial number input permitter 144 is manufactured in a limited number and strictly taken charge of. As a result, the intentional rewriting of the serial number is surely prevented.

While in the above-described second and third embodiments, the serial number of the copying machine is stored in the backed-up memory 107 for backing up data inputted to the operation portion 104, the portion for storing the serial number to specify the copying machine may separately be provided. The specifying data is not limited to the serial number of the copying machine. The copy date may be used as the specifying data by using a clock incorporated in the copying machine body 1 or in the serial number inputter 103. Alternately, both the copy date and the serial number may be used as the specifying data.

Further, the present invention may be employed in a copying machine provided with a recognition processing function to determine whether the original image is inhibited from being copied or not, so that based on a result of the determination, the specifying data such as a serial number of the copying machine is outputted from the pattern generating portion 137 only when the original image is inhibited from being copied.

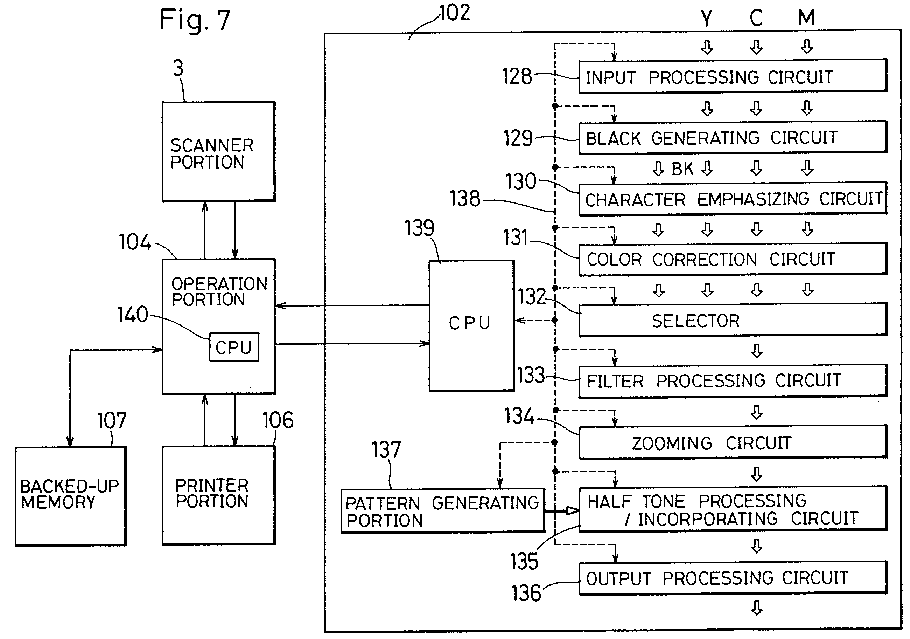

Subsequently, a fourth embodiment shown in Figs. 7 to 10 will be described. In Fig. 7, each block is identified by the same reference designation as that of Figs. 4 and 6. In this embodiment having the above-described arrangement, the CPU 140 of the operation portion 104 is provided with a data writing function for specifying the copying machine with which the original image was copied. The CPU 140 writes a specifying data particular to the machine to the backed-up memory 107 with a data inputting means for inputting the specific data, a data storing means for storing the specifying data therein and a controlling means for controlling the data inputting means to function only once.

In recent years, digital color copying machines of an arrangement similar to that of this embodiment is generally provided with many functions. As one of such functions, many machines have a calendar/clock function. In the fourth embodiment, since the calendar/clock function must be initialized at the time of an adjustment or a test at the plant, the initial setting data of the calendar/clock function is used as the specifying data for specifying the copying machine with which the original is copied. The calendar/clock function employs a digital clock.

When the copying machine is manufactured in a plurality of plants, plant information of the copying machine is also used. The specifying data is written, for example, by operating the CPU 140 of the operation portion 104 at the time of a test or an adjustment. The initial setting data of the calendar/clock function and the plant data are favorable for the specifying data which can be set only once, since they cannot be changed once they are set.

The pattern generating portion 137 provided in the image processing unit 2 adds a data particular to a copying machine (in this embodiment, the initial setting data of the calendar/clock function, etc.) to the original image data in order to discriminate and manage the copying machine with which the copy was made. As the added data, a pattern in accordance with a predetermined rule is used which is difficult to view with the naked eye when printed on the sheet as a copy image and that can be recognized and discriminated by reading out by a separately provided scanner after the copied image is outputted.

When a copying operation is started at the copying machine body 1, the pattern generating portion 137 converts the added data to generate a pattern of addition and outputs the pattern of addition to the half tone processing/incorporating circuit 135. The half tone processing/incorporating circuit 135 incorporates the pattern of addition in the original image data, and the composite image data is outputted to the printer portion 106 through the output processing circuit 136.

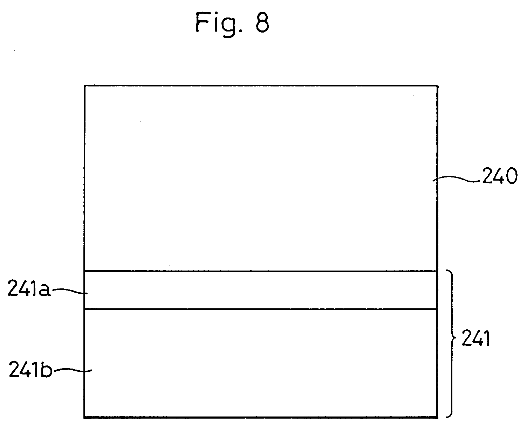

The initial setting of the backed-up memory area by the CPU 140 is performed in the following manner as shown in Figs. 8 to 10: An initialization executing program is operated in the initial condition of the backed-up memory 107 to brought the copying machine into a backed-up memory initialized condition. Then, the calendar/time is initialized to bring the copying machine into the calendar/time initialized condition. Lastly, various data such as a light quantity data of a scanner lamp (halogen lamp 27 of Fig. 1) of the scanning optical system 14 and a toner density data of the developer unit 7 are initialized to bring the copying machine into a data initialized condition. These processes will subsequently be described.

First, as the calendar/clock data, the Greenwich mean time is used. As the data, Japan standard time or standard time of other countries may be used. As the plant data, a mark specifying the plant is inputted simultaneously with the initial setting of the calendar/clock data. The copying machine can be specified by maintaining the data inputted at the time of the initial setting of the calendar/clock data.

Normally, the memory 107 backed up by the operation portion 104 must be initialized since its initial condition is unfixed. Also, the backed up data must be initialized. In this embodiment, since the initial setting data of the calendar/clock function including the plant data can be initialized only once, the backed-up area is divided into an area rewritable by initial setting and other areas.

Specifically, as shown in Fig. 8, the mapping of the backed-up area is divided into an initializable area 240 which is rewritable and an uninitializable area 241 which is not rewritable. The uninitializable area 241 is divided into an initialization recognizing area 241a and a calendar/time initial setting data storing area 241b.

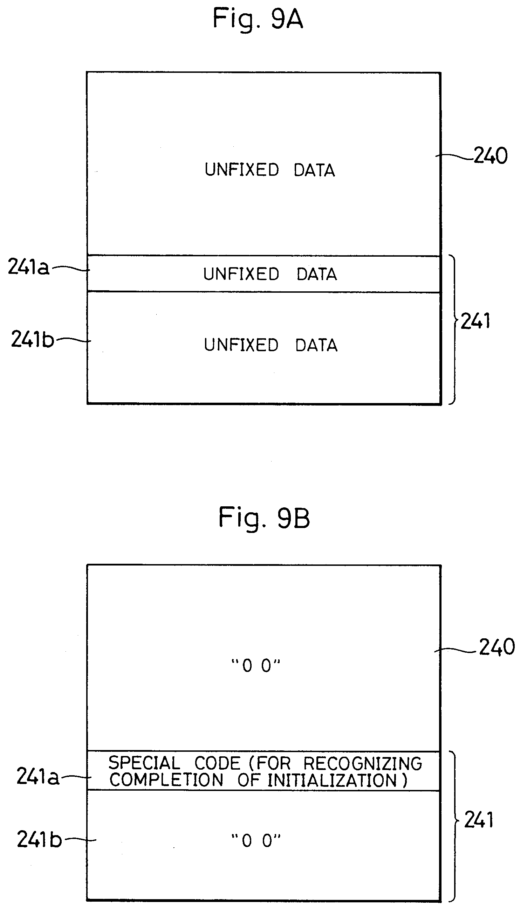

At the operation portion CPU 140, the initialization of the calendar/clock function is controlled to be performed only once. As shown in Fig. 9A, the contents of all the areas 240, 241a and 241b of the backed-up memory area are unfixed under initial condition. As shown in Fig. 9B, the control of initialization of the calendar/clock function is executed for the entire backed-up area of the memory 107. When the area is initialized, "00" is written as data in the areas other than the initialization recognizing area 241a, i.e. in the initializable area 240 and the calendar/time initial setting data storing area 241b.

In the area 241a for recognizing the completion of the initialization which area is provided in the unrewritable area, a special code for recognizing that the area 241a has been initialized is written over several bites. Normally, when the memory is in the initial unfixed condition, the same data are lined in several bite units.

Therefore, by using as the special code a code where clearly intentionally written data are lined and by recognizing the data in the initialization recognizing area 241a which serves as the initialization completion code area by the operation portion CPU 140, the initialization executing program is controlled not to operate. The initialization executing program is executable when no special code is written in the initialization recognizing area 241a.

The calendar/time initial setting data for specifying the copying machine is also provided in the uninitializable area 241 (calendar/time initial setting data storing area 241b) which cannot be rewritten by initial setting as described previously. The initial setting of the calendar and time is controlled to be performed only when the initial setting data are all "00" as shown in Fig. 9B.

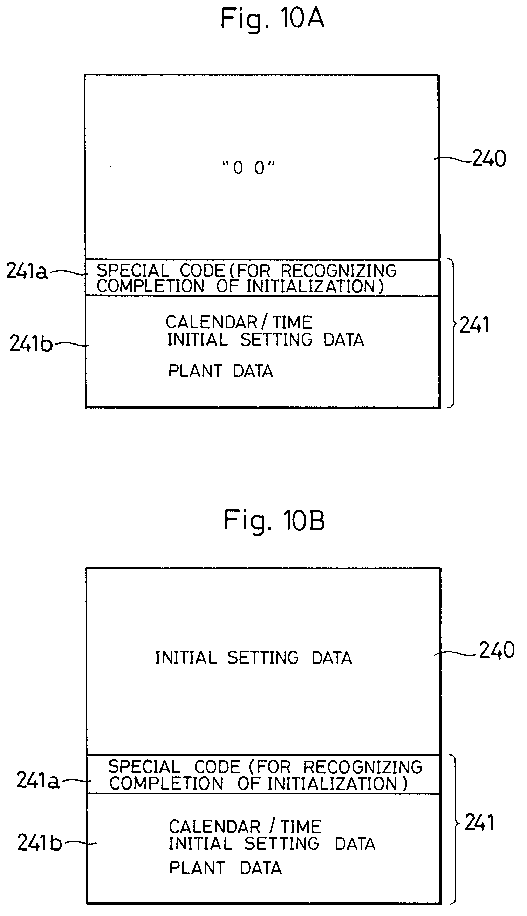

When the calendar/time are initialized, as shown in Fig. 10A, the initial setting data are stored in the storing area 241b provided in the unrewritable area 241 as the calendar/time initial setting data including the plant data. The stored calendar/time initial setting data are outputted from the operation portion CPU 140 to the image processing unit CPU 139 as the data for specifying the copying machine, and transmitted from the image processing CPU 139 by way of the data address 138 to the pattern generating portion 137 to be set therein.

After the calendar/time has thus been initialized, initial setting programs for various necessary data such as the light quantity data of the halogen lamp and the toner density data are executed, and as shown in Fig. 10B, only the data in the initializable area 240 are initialized.

Thus, in the fourth embodiment, since the initial setting data of the calendar/clock function is used as the data for specifying the apparatus such as the copying machine, the data does not have to be changed once it is set, and the input method is controlled not to function once it is set, so that the data for specifying the apparatus cannot be changed. Consequently, for example when a bank note is copied and the copy is used for ill purposes, the copying machine with which the original prevented from being copied was made is correctly recognized by detecting the specifying data recorded on the copy, which largely contributes to the prevention of crimes such as the forgery of bank notes.

Obviously, many modifications and variations of the present invention are possible in light of the above teachings. It is therefore to be understood that within the scope of the appended claims, the invention may be practiced other than as specifically described.

## Claims

1. An image forming apparatus comprising:
an image reading portion (3);
an image outputting portion (50) which forms a read-in image on a sheet of paper;
means (34) for determining whether the read-in image is the same as a specific image or not; and
inhibiting means (25) for inhibiting an operation of the image reading portion (3) when the read-in image is the specific image.

2. An image forming apparatus according to claim 1, wherein said image reading portion (3) has a scanning optical system (14) which optically scans an original M, and wherein said inhibiting means (25) inhibits a scanning by the scanning optical system (14).

3. An image forming apparatus according to claim 1, wherein said image reading portion (3) has a scanning optical system (14) which optically scans an original M, said scanning optical system (14) including a lamp (27), and wherein said inhibiting means (25) changes a light quantity of the lamp (27) to be different from a normal light quantity.

4. An image forming apparatus according to claim 1, wherein said image reading portion (3) has a scanning optical system (14) which optically scans an original M and photoelectrically converting means (16, 23) for converting output light of the scanning optical system into an electric signal, and wherein said inhibiting means (25) inhibits an operation of the photoelectrically converting means (16, 23).

5. An image forming apparatus according to claim 1, wherein said inhibiting means (25) further inhibits a supply of an image data to the image outputting portion (50).

6. An iamge reading apparatus comprising:
a scanning optical system (14) which optically scans an original M;
a photoelectrically converting means (16, 23) for converting an output of the scanning optical system (14) into an electric signal;
an image processing circuit (17) which processes an output of the photoelectrically converting means (16, 23);
determining means (34) for determining whether a read-in image is the same as a specific image or not; and
inhibiting means (25) for inhibiting a reading operation when the read-in image is determined to be the same as the specific image.

7. An image reading apparatus according to claim 6, wherein said inhibiting means (25) inhibits a scanning by the scanning optical system (17).

8. An image reading apparatus according to claim 6, wherein said inhibiting means (25) changes a light quantity of a lamp (27) of the scanning optical system (17) to be different from a normal light quantity.

9. An image reading apparatus according to claim 6, wherein said inhibiting means (25) inhibits an operation of the photoelectrically converting means (16, 23).

10. An image reading apparatus comprising:
an image reading portion (3);
a processing circuit (17) which processes a read-in image data;
an image outputting unit (50) which forms an image on a sheet of paper based on the processed image data;
determining means (34) for determining whether an input image data is the same as a specific image data or not; and
inhibiting means (25) for inhibiting a normal operation of the processing circuit (17) when the input image data is the specific image data.

11. An image reading apparatus according to claim 10, wherein said processing circuit (17) has a shading correcting circuit (24), and wherein said inhibiting means (25) changes a shading correction value of the shading correcting circuit (24).

12. An image reading apparatus according to claim 10, further comprising an interface (26) which outputs the image data processed by the processing circuit (17), wherein said inhibiting means (25) disables the interface (26).

13. An image forming system comprising:
an image forming apparatus (1);
an image processing circuit provided in the image forming apparatus (1), said image processing circuit incorporating a specific data in a copy image data of an original image M as a data difficult to view by a naked eye and outputting the data;
a data inputter (103) connectable to and disconnectable from the image forming apparatus (1), said data inputter (103) inputting the specific data to the image forming apparatus (1);
connection recognizing means for recognizing that the data inputter (103) is connected to the image forming apparatus (1); and
storing means (107) for storing the specific data inputted from the data inputter (103) when it is recognized that the data inputter (103) is connected to the image forming apparatus (1).

14. An image forming system according to claim 13, wherein said specific data is a serial number of the image forming apparatus (1).

15. An image forming system according to claim 13, wherein said specific data is a date of an image formation.

16. An image forming system comprising:
an image forming apparatus (1);
an image formation processing circuit provided in the image forming apparatus (1), said image formation processing circuit incorporating a specific data in a copy image data of an original image M as a data difficult to view by a naked eye and outputting the data;
data inputting means (103) for inputting the specific data;
storing means (107) for storing the inputted specific data;
data input permitter connectable to and disconnectable from the image forming apparatus;
connection recognizing means for recognizing that the data input permitter is connected to the image forming apparatus; and
controlling means (104) for permitting an input of the specific data from the data inputting means when it is recognized that the data input permitter is connected to the image forming apparatus.

17. An image forming system according to claim 16, wherein said specific data is a serial number of the image forming apparatus.

18. An image forming system according to claim 17, wherein said specific data is a date of an image formation.

19. An image forming apparatus having a calendar/clock function, comprising:
an image reading portion (3);
an image processing circuit which outputs a specific data on a read-in original image data as a data difficult to view by a naked eye;
a printer (106) which forms an image on a sheet of paper based on an output data of the image processing circuit;
initial setting means for performing an initial setting of the calendar/clock function;
storing means (107) for storing an initial setting data of the calendar/clock function as a specific data; and
controlling means (104) for controlling the initial setting means to function only once.

20. An image forming apparatus according to claim 19, wherein said specific data is a data for specifying the image forming apparatus (1).

21. An image forming apparatus according to claim 20, wherein said specific data is a serial number of the image forming apparatus (1).

22. An image forming apparatus according to claim 19, wherein said specific data is a date of an image formation.
